# EUROPEAN PATENT APPLICATION

(11) **EP 1 167 323 A1**
(43) Date of publication of application: **02.01.2002**
(21) Application number: 00650073.0
(22) Date of filing: 29.06.2000
(51) Int. Cl.: C05F 17/02, C05F 17/00

(54) **Composting method and container**

(71) Applicant: THE PROCTER & GAMBLE COMPANY, Cincinnati, Ohio 45202 (US)
(72) Inventor: James, Martin Ian, 65016 Montesilvano Colle Pescara (PE) (IT); Gummer, Christopher Lawrence, Chilworth, Surrey, GU4 855 (GB)
(74) Representative: Canonici, Jean-Jacques

(57) **Abstract**

The invention concerns a method and container for promoting the aerobic composting of solid composting organic material without the necessity of agitating such material. This is achieved by the positioning of three-dimensional structures formed from substantially rigid biodegradable material at intervals along the height dimension of a mass of compostable material, thereby separating the compostable material into discrete layers and creating aeratable spaces between the layers.

## Description

This invention relates to a composting method and container. In particular, it relates to a method and container for promoting the aerobic composting of solid compostable organic material without the necessity of agitating such material.

Effective composting requires aeration of the material to be composted. While aeration can be achieved by manually turning or mixing the composting material, this is time-consuming and impractical where large volumes are concerned. A number of systems for promoting aeration of composting material have been proposed. Some of these systems are based on the provision of ventilation or mixing means, but such systems are relatively complex as regards manufacture and use.

Composting systems based on ventilation/mixing means are described in the following patents/patent applications.

WO-A-94/29241 discloses a composting container in which air is supplied to the biomass from the bottom of the container and is preheated by a supply pipe located along the inside of the container.

US-A-5152414 discloses a composting container comprising interconnecting panels having insulating spaces therein, with gas passageways passing through the panels.

US-A-5695986 discloses a compost bin comprising perforated air tubes positioned at vertically-spaced intervals in the composting matter.

WO-A-99/03799 discloses a composting container comprising a vertical insulated composting tower with one or more compartments. The base of each compartment is fitted with a plenum and grate through which air is self induced and output is regularly removed.

WO-A-96/33962 discloses a twin-walled, insulated compost receptacle having vertical ventilation channels in the walls which are connected to an air duct.

US-A-5036999 discloses a composting container comprising a shaft-like ventilating element.

US-A-5700689 discloses a composting container comprising ventilating openings which extend through the container walls, and air-guiding elements on the inside surface of the container wall which guide the supply air which enters through said openings and flows along the inside surface of the container wall.

US-A-5432088 discloses a compost bin comprising horizontal, L-shaped aeration/mixing slots to permit mixing and aeration of the composting material on application of a mixing tool.

US-A-5765437 discloses a compost aerator and monitor having a cylindrical helical screw for insertion into a compost pile to create a core of compost material. The screw has a handle to enable the screw to be turned rapidly, thus permitting rapid introduction into a compost pile and precluding rotation on withdrawal, thereby retaining the core of compost material.

US-A-5713980 discloses a composting device comprising a flexible composting mat having netting to retain organic material, with handles disposed on opposite sides of the netting. The mat containing the organic material to be composted is closed for an appropriate period of decomposition, after which the mat is opened and the organic material is rolled by pulling on the handles, thus aerating the organic material.

US-A-5457031 discloses a composter having a shape which allows it to be rolled on the ground to provide mixing. The composter may comprise perforated tubes to allow further aeration and the controlled addition of additives in the form of liquids or granules.

Modular systems for promoting aeration have also been proposed in US-A-5190572 and US-A-5441552. However, these systems are based on materials which are non-biodegradable and environmentally hazardous.

US-A-5190572 discloses a composting device comprising an assembly of stackable, rectangular, double-walled sub-units formed of plastic.

US-A-5441552 discloses a modular composting container system comprising self-contained stackable containers having an aeration base with spaced openings and side walls. The walls are constructed from material such as aluminum, plastic or stainless steel. The base is constructed from metal, plastic, fibreglass or the like.

It is an object of the invention to provide a composting method and container which avoid the disadvantages of the prior art.

It is also an object of the invention to provide a method and container for promoting aerobic composting of solid compostable organic material without the necessity of agitating such material.

It is a further object of the invention to provide a composting method and container in which composting enhancers and accelerators can be readily incorporated in the composting material.

The present invention is based essentially on the incorporation of one or more three-dimensional structures in a mass of compostable material. The three-dimensional structures are formed from substantially rigid biodegradable material and are positioned at intervals along the height dimension of the mass of compostable material, thereby separating the compostable material into discrete layers and creating aeratable spaces between the layers. The three-dimensional layer-forming structures permit the flow of air through the mass of compostable material, thereby eliminating the need for agitating the material.

According to a first aspect of the invention, there is provided a method for promoting the aerobic composting of solid compostable organic material without the necessity of agitating such material, which method comprises the steps of:
(a) forming a mass of solid compostable organic material, said mass having a generally vertical height dimension and a generally horizontal cross-sectional area;
(b) positioning within said mass of compostable material, at intervals along the height dimension of the mass, one or more three-dimensional structures formed from substantially rigid biodegradable material, which structures extend across substantially the entire horizontal cross-sectional area of said mass of compostable material to thereby separate said mass of compostable material into discrete layers; and
(c) maintaining said layered compostable mass under conditions suitable for effecting a desired extent of biodegradation of said compostable material; said three-dimensional, layer-forming structures creating aeratable spaces between said layers of compostable material; and said three-dimensional layer-forming structures further being formed of material which is less biodegradable than the mass of solid organic material being composted.

According to a second aspect of the invention, there is provided a container useful for promoting the aerobic composting of solid compostable organic material placed therein, without the necessity of agitating such material, which container comprises:
(a) generally vertical container walls which define a volume having a generally vertical height dimension and a generally horizontal cross-sectional area; and
(b) one or more three-dimensional structures which are formed from substantially rigid biodegradable material and which are positioned within the volume of said container at intervals along the height dimension of the container, which structures extend across substantially the entire horizontal cross-sectional area of said container to thereby separate organic compostable material placed in said container on top of said structures into discrete layers; said three-dimensional, layer-forming structures creating aeratable spaces between said layers of compostable material; and said three-dimensional layer-forming structures further being formed of material which is less biodegradable than the mass of solid organic material being composted within said container.

According to a third aspect of the invention, there is provided a kit comprising a container according to the invention and instructions for its use.

According to a fourth aspect of the invention, there is provided use of a three-dimensional structure formed from substantially rigid biodegradable material in a method or container according to the invention.

In the present invention, the compostable material may be any organic material. However, the present invention is particularly applicable to the composting of garden waste. Garden waste may include, for example, grass, leaves, plant/vegetable matter and the like or any combination thereof.

The mass of organic material to be composted in accordance with the present invention will typically comprise from about 100 to 1,000 litres, preferably from about 250 to 350 litres.

The three-dimensional layer-forming structures used in the method and container of the present invention are formed from substantially rigid biodegradable material, which is less biodegradable than the mass of solid organic material being composted. Preferably, the layer-forming structures retain their physical form during composting until composting of the mass of compostable material is at least 50% complete.

The layer-forming structures may comprise, for example, cardboard or high basis weight paper having a basis weight of at least 1000 g/m², preferably at least 1500 g/m². Corrugated cardboard is preferred, especially corrugated cardboard having perforations therein so as to maximise the flow of air through the mass of compostable material.

The layer-forming structures used in the present invention typically have a thickness of about 5 to 50 mm, preferably about 10 to 20 mm.

The layer-forming structures are conveniently positioned within the mass of compostable material at intervals of from about 10 to 30 cm, preferably from about 15 to 25 cm. The number of layer-forming structures within the mass of compostable material generally ranges from 1 to 8, preferably from 2 to 8, and more preferably from 4 to 6.

The biodegradable layer-forming structures used in the present invention may be impregnated with composting enhancers and/or accelerators. Such agents may be selected from microorganisms, enzymes, preferably naturally-occurring enzymes, or other compounds which accelerate or enhance the composting process, and mixtures thereof. The layer-forming structures may additionally be impregnated with nutrients to enhance the growth of the microorganisms and/or balance the nutrient composition within the compostable mass. Suitable enzymes include xylanases and cellulases. Suitable microorganisms include any biodegradative strain of streptomyces and trichoderma. Suitable nutrients include nitrogen containing or nitrogen releasing materials, phosphate containing or phosphate releasing materials and various trace metals, for example iron.

The layer-forming structures are preferably impregnated with the composting enhancers/accelerators at a concentration of from about 0.01 to 10 g/m², more preferably from about 0.1 to 1.0 g/m².

In the present invention, composting parameters such as time, temperature, oxygen level and moisture content will depend on the nature of the material to be composted. In general, the compostable material will be added at ambient temperature and the temperature will typically increase to 60°C during the composting of the material.

The method according to the invention may be carried out in the absence of a container, but is conveniently carried out in a container.

The invention also provides a container for promoting the aerobic composting of solid compostable organic material placed therein. The container of the invention has generally vertical container walls which define a volume having a generally vertical height dimension and a generally horizontal cross-sectional area. The container walls will typically have a generally vertical height dimension of approximately 0.75 m to 1.5 m and a generally horizontal cross-sectional area of approximately 0.5 to 1.0 m².

A typical container is generally rectangular in plan having dimensions of 50 cm x 50 cm x 90 cm. The container walls are preferably segmented, with each segment having a width of approximately 13 cm, and the segments being separated from one another by an air gap of approximately 2 cm.

The container of the invention comprises three-dimensional biodegradable layer-forming structures as described hereinabove. The layer-forming structures are conveniently shaped so as to conform with the shape of the container, and typically have a thickness of about 5 to 50 mm, preferably about 10 to 20 mm.

The layer-forming structures used in the container of the invention are conveniently positioned within the volume of the container at intervals of from about 10 to 30 cm, preferably from about 15 to 25 cm. The number of layer-forming structures positioned within the volume of the container generally ranges from 1 to 8, preferably from 2 to 8, and more preferably from 4 to 6.

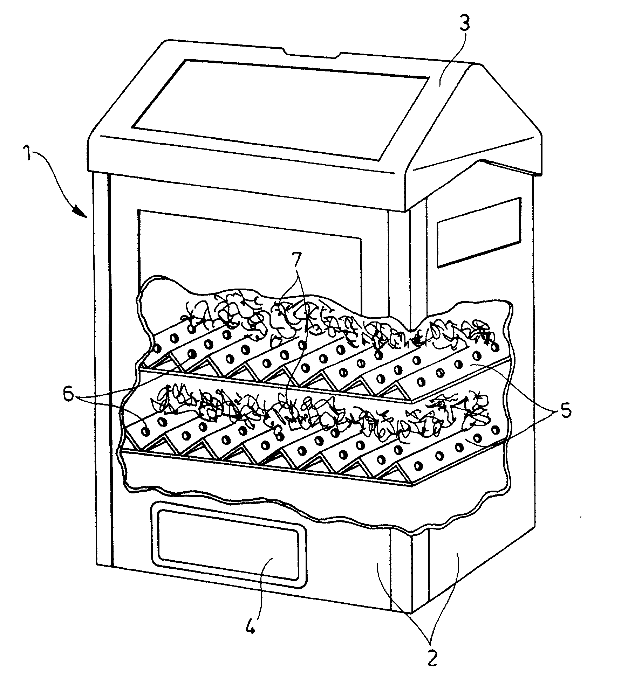

The accompanying drawing illustrates a preferred embodiment of a composting container in accordance with the present invention. In the drawing, portions of the container side walls are cut away to show the compostable material therein, separated into layers by three-dimensional structures. The container 1 comprises generally vertical container walls 2 and a removable lid 3. The container 1 includes therein layers of compostable material 7 which are separated from one another by three-dimensional biodegradable layer-forming structures 5 having perforations 6. An air inlet 4 is conveniently provided in at least one of the container walls 2.

The container of the invention may have a modular configuration comprising a plurality of stackable containers.

If desired, air from an air supply means may be introduced into the aeratable spaces created by the layer-forming structures using a conventional mechanical device.

The composting method and container according to the invention have several advantages, including the following:
1. The use of layer-forming structures permits the introduction of air into all areas of the compost mass, enabling aerobic decomposition to continue and preventing the central areas of the mass from becoming anaerobic, and thereby eliminating the necessity of agitating the compostable material.
2. The layer-forming structures may be impregnated with composting enhancers and accelerators, thereby providing these materials in a readily handled form and reducing the risks associated with their exposure during handling/application.
3. The layer-forming structures ultimately degrade to enhance the structure of the final product.
4. Use of the final product has a number of beneficial effects, improvements in the following being noted:
   (a) soil conditioning;
   (b) disease control in plants/soil;
   (c) pest control in plants/soil;
   (d) growth control of plants; and
   (e) bioremediation of contaminated soils.

The invention is not limited to the embodiments described herein which may be modified or varied without departing from the scope of the invention.

## Claims

1. A method for promoting the aerobic composting of solid compostable organic material without the necessity of agitating such material, which method comprises the steps of:
(a) forming a mass of solid compostable organic material, said mass having a generally vertical height dimension and a generally horizontal cross-sectional area;
(b) positioning within said mass of compostable material, at intervals along the height dimension of the mass, one or more three-dimensional structures formed from substantially rigid biodegradable material, which structures extend across substantially the entire horizontal cross-sectional area of said mass of compostable material to thereby separate said mass of compostable material into discrete layers; and
(c) maintaining said layered compostable mass under conditions suitable for effecting a desired extent of biodegradation of said compostable material; said three-dimensional, layer-forming structures creating aeratable spaces between said layers of compostable material; and said three-dimensional layer-forming structures further being formed of material which is less biodegradable than the mass of solid organic material being composted.

2. A method according to claim 1, wherein the mass of solid compostable organic material comprises from about 100 to 1,000 litres, preferably from about 250 to 350 litres.

3. A method according to claim 1 or 2, wherein the three-dimensional layer-forming structures are positioned within the mass of compostable material at intervals of from about 10 to 30 cm, preferably from about 15 to 25 cm.

4. A method according to any of claims 1 to 3, wherein the number of layer-forming structures positioned within the mass of compostable material ranges from 1 to 8, preferably from 2 to 8, and more preferably from 4 to 6.

5. A method according to any of claims 1 to 4, wherein the layer-forming structures comprise cardboard or high basis weight paper having a basis weight of at least 1000 g/m², preferably at least 1500 g/m².

6. A method according to any of claims 1 to 5, wherein the layer-forming structures comprise corrugated cardboard having perforations therein.

7. A method according to any of claims 1 to 6, wherein the layer-forming structures have a thickness of about 5 to 50 mm, preferably about 10 to 20 mm.

8. A method according to any of claims 1 to 7, wherein the layer-forming structures retain their physical form until composting of the mass of compostable material is at least 50% complete.

9. A method according to any of claims 1 to 8, wherein the layer-forming structures are impregnated with composting enhancers and/or accelerators.

10. A method according to claim 9, wherein the composting enhancers/accelerators are selected from microorganisms, enzymes or other compounds which accelerate or enhance the composting process, and mixtures thereof.

11. A method according to claim 10, wherein the enzymes are selected from xylanases and cellulases; and the microorganisms are selected from biodegradative strains of streptomyces and/or trichoderma.

12. A method according to any of claims 9 to 11, wherein the layer-forming structures are impregnated with the composting enhancers/accelerators at a concentration of from about 0.01 to 10 g/m², preferably from about 0.1 to 1.0 g/m².

13. A method according to any of claims 1 to 12, wherein the solid compostable organic material comprises garden waste.

14. A method according to any of claims 1 to 13 which is carried out in a container.

15. A method according to any of claims 1 to 14, wherein air is introduced into the aeratable spaces from an air supply means using a mechanical device.

16. A container useful for promoting the aerobic composting of solid compostable organic material placed therein, without the necessity of agitating such material, which container comprises:
(a) generally vertical container walls which define a volume having a generally vertical height dimension and a generally horizontal cross-sectional area; and
(b) one or more three-dimensional structures which are formed from substantially rigid biodegradable material and which are positioned within the volume of said container at intervals along the height dimension of the container, which structures extend across substantially the entire horizontal cross-sectional area of said container to thereby separate organic compostable material placed in said container on top of said structures into discrete layers;
said three-dimensional, layer-forming structures creating aeratable spaces between said layers of compostable material; and said three-dimensional layer-forming structures further being formed of material which is less biodegradable than the mass of solid organic material being composted within said container.

17. A container according to claim 16, wherein the container walls have a generally vertical height dimension of approximately 0.75 to 1.5 m and a generally horizontal cross-sectional area of approximately 0.5 to 1.0 m².

18. A container according to claim 16 or 17, which is generally rectangular in plan and having dimensions of 50 cm x 50 cm x 90 cm, the container walls being segmented with each segment having a width of approximately 13 cm and the segments being separated from one another by an air gap of approximately 2 cm.

19. A container according to any of claims 16 to 18, having a modular configuration comprising a plurality of stackable containers.

20. A container according to any of claims 16 to 19, wherein the solid compostable organic material placed therein comprises from about 100 to 1,000 litres, preferably from about 250 to 350 litres.

21. A container according to any of claims 16 to 20, wherein the three-dimensional layer-forming structures are positioned within the volume of the container at intervals of from about 10 to 30 cm, preferably from about 15 to 25 cm.

22. A container according to any of claims 16 to 21, wherein the number of layer-forming structures positioned within the volume of the container ranges from 1 to 8, preferably from 2 to 8, and more preferably from 4 to 6.

23. A container according to any of claims 16 to 22, wherein the layer-forming structures comprise cardboard or high basis weight paper having a basis weight of at least 1000 g/m², preferably at least 1500 g/m².

24. A container according to any of claims 16 to 23, wherein the layer-forming structures comprise corrugated cardboard having perforations therein.

25. A container according to any of claims 16 to 24, wherein the layer-forming structures have a thickness of about 5 to 50 mm, preferably about 10 to 20 mm.

26. A container according to any of claims 16 to 25, wherein the layer-forming structures retain their physical form until composting of the compostable material is at least 50% complete.

27. A container according to any of claims 16 to 26, wherein the layer-forming structures are impregnated with composting enhancers and/or accelerators.

28. A container according to claim 27, wherein the composting enhancers/accelerators are selected from microorganisms, enzymes or other compounds which accelerate or enhance the composting process, and mixtures thereof.

29. A container according to claim 28, wherein the enzymes are selected from xylanases and cellulases; and the microorganisms are selected from biodegradative srains of streptomyces and/or trichoderma.

30. A container according to any of claims 27 to 29, wherein the layer-forming structures are impregnated with the composting enhancers/accelerators at a concentration of from about 0.01 to 10 g/m², preferably from about 0.1 to 1.0 g/m².

31. A container according to any of claims 16 to 30, wherein the solid compostable organic material comprises garden, waste.

32. A container according to any of claims 16 to 31, wherein air is introduced into the aeratable spaces from an air supply means using a mechanical device.

33. A kit comprising a container according to any of claims 16 to 32 and instructions for its use.

34. Use of a three-dimensional structure formed from subtantially rigid biodegradable material in a composting method according to any of claims 1 to 15 or a container according to any of claims 16 to 32.
